# FASCICULE DE BREVET EUROPEEN

(11) **EP 1 099 467 B1**
(45) Date de publication et mention de la délivrance du brevet: **14.02.2007**
(21) Numéro de dépôt: 00403039.1
(22) Date de dépôt: 31.10.2000
(51) Int. Cl.: B01D 53/94, B01D 53/02, B01J 20/04, B01J 20/06

(54) **Procédé pour l'élimination des oxydes d'azote**
Verfahren zur Entfernung von Stickstoffoxiden
Process for removing nitrogen oxides

(30) Priorité: 10.11.1999 FR 9914144
(43) Date de publication de la demande: 16.05.2001
(73) Titulaire: Institut Français du Pétrole, 92852 Rueil Malmaison Cédex (FR)
(72) Inventeur: Becue, Thierry, 75006 Paris (FR); Mabilon, Gil, 78420 Carrieres sur Seine (FR); Villeret, Philippe, 92500 Rueil-Malmaison (FR)

(56) Documents cités:
- EP-A- 0 710 622
- US-A- 5 340 562
- US-A- 5 756 057
- US-A- 5 800 793
- US-A- 5 898 015

## Description

### Domaine technique

La présente invention concerne des matériaux qui favorisent l'élimination par adsorption des oxydes d'azote (NO et NO₂, couramment appelés NOₓ) présents dans un mélange gazeux pouvant être sur-stoechiométrique en composés oxydants et plus particulièrement en oxygène, lesdits matériaux n'étant pas empoisonnés par les produits soufrés présents dans ces gaz. L'invention s'applique à l'élimination des oxydes d'azote (NOₓ) présents dans les gaz d'échappement de moteurs de véhicules automobiles et tout particulièrement de véhicules fonctionnant avec du diesel.

### Etat de la technique antérieure

La forte toxicité des oxydes d'azote, leur rôle dans la formation des pluies acides et de l'ozone troposphérique ont conduit à la mise en place de normes sévères limitant les rejets de ces composés. Pour satisfaire ces normes il est généralement nécessaire d'éliminer au moins une partie de ces oxydes présents dans les gaz d'échappement des moteurs automobiles ou stationnaires et des turbines.

L'élimination des oxydes d'azote par décomposition thermique ou de préférence catalytique est envisageable mais les hautes températures exigées par cette réaction sont incompatibles avec celles des gaz d'échappement. Seule la réduction catalytique des oxydes d'azote en azote est réalisable en utilisant les réducteurs présents, mais en faible quantité, dans le gaz d'échappement (CO, H₂, hydrocarbures imbrûlés ou dont la combustion a été imparfaite dans le moteur), et également en injectant, en amont du catalyseur, un complément de composés réducteurs. Ces agents de réduction sont des hydrocarbures, des alcools, des éthers ou autres composés oxygénés; ils peuvent être également le carburant liquide ou gazeux (sous pression "GNC" ou liquéfié "GPL") alimentant le moteur ou la turbine.

La demande de brevet EP 0 540 280 A1 décrit un dispositif pour réduire l'émission des oxydes d'azote dans les gaz d'échappement de moteurs à combustion interne, qui comprend un matériau pour l'adsorption et la désorption des oxydes d'azote. Selon ce procédé, les oxydes d'azote sont emmagasinés, au cours du fonctionnement en régime pauvre du moteur, c'est à dire pauvre en hydrocarbures, sous la forme de nitrates. Mais la capacité de stockage d'un piège fonctionnant selon ce principe est généralement détériorée par l'adsorption de produits soufrés, contenus dans les gaz d'échappement et qui forment des sulfates plus stables que les nitrates, empoisonnant le piège.

Par ailleurs, suite au piégeage des NOₓ, il est nécessaire de procéder à une étape de désorption des oxydes d'azote suivie de leur réduction. On connaît des dispositifs de traitement par oxydation catalysée du monoxyde de carbone CO et des hydrocarbures HC contenus dans les gaz d'échappement, faisant appel, par exemple à des catalyseurs de réduction des oxydes d'azote, appelés catalyseurs DeNOₓ, qui sont actifs pour réaliser la réduction des NOₓ dans des plages de température comprises entre 200 et 350°C comprenant par exemple des métaux précieux sur des supports en oxyde, tels que du platine ou du palladium déposé sur un support en alumine, en oxyde de titane ou de zirconium ou par des pérovskites ou à des plages de température comprises entre 350 et 600°C comprenant par exemple des zéolithes hydrothermiquement stables (par exemple Cu-ZSM5). Un dispositif de traitement des gaz d'échappement d'un moteur à allumage par compression comportant un catalyseur et un absorbeur d'oxydes d'azote placés dans le collecteur d'échappement est décrit par exemple dans les brevets EP 0 540 280 A1 et EP 0 718 478 A1.

Il est donc nécessaire que le matériau se comportant comme un piège pour les oxydes d'azote soit capable d'adsorber les oxydes d'azote aux basses températures, jusqu'à la température nécessaire pour le fonctionnement du catalyseur de réduction des NOₓ, le piège assurant alors la désorption des oxydes d'azote qui viennent au contact du catalyseur DeNOx à une température suffisante pour assurer l'amorçage de la réaction de réduction des NOₓ.

Il a déjà été décrit des oxydes présentant une structure cristallographique qui génère des canaux de taille suffisante pour accueillir des oxydes d'azote (brevets JP09075715A et JP9075718A). Les solides utilisés dans ces brevets sont des oxydes mixtes présentant la structure cristallographique de la hollandite et les formulations bien spécifiques K₃₆Zn₁₈Sn₆₂O₁₆ et K₁₈Al₁₈Sns₆₂O₁₆.

Dans le brevet FR 2 733 924, il est aussi fait état d'un matériau de formule YBa₂CU₃O₇₋ₓ qui permet d'intégrer les oxydes d'azote dans l'oxyde mixte composant le matériau. Ce brevet indique que le matériau, après avoir été chargé d'oxydes d'azote, se transforme en passant d'une structure orthorhombique riche en oxygène en une structure tétragonale pauvre en oxygène quand la teneur en oxygène du gaz diminue, et que cette transition de phase provoque la désorption des oxydes d'azote. Selon ce procédé, il est alors possible d'influencer l'adsorption et la désorption des oxydes d'azote en faisant varier les teneurs en oxygène des gaz d'échappement. Il a été récemment montré (K-Y. Lee, K. Watanabe, M. Misono, Applied Catalysis B 13, 241 (1997)) que l'adsorption de NOₓ en présence d'oxygène sur ce matériau YBa₂Cu₃O₇₋ₓ conduit en fait à la formation d'espèces nitrates de baryum (Ba(NO₃)₂). Cette même étude montre aussi que ce matériau perd de façon dramatique ses propriétés d'adsorption des oxydes d'azote en présence de dioxyde de carbone par formation de carbonates de baryum. Les espèces de sulfates de baryum étant plus stables que les espèces nitrates, il est à craindre qu'un composé du type YBa₂Cu₃O₇₋ₓ s'empoisonne aussi en présence de dioxyde de soufre en formant des espèces sulfates sur les sites d'adsorption des oxydes d'azote.

Les matériaux qui font l'objet de ce brevet peuvent se trouver à l'état naturel ou peuvent être synthétisés en laboratoire. Les brevets EP 0 623 556 A1 et EP 0 710 622 décrivent par exemple des méthodes pour obtenir certains de ces solides. Aussi, parmi ces solides, des matériaux à base de manganèse et présentant des canaux de diamètres suffisants pour insérer les NOₓ sont décrits dans le Gmelin Handbook [Gmelin Handbook of Inorganic and organometallic Chemistry, Mn n°56, A5b1, Springer-Verlag, 1996].

### Résumé de l'invention

L'invention concerne des matériaux pour l'élimination des oxydes d'azote NO et NO₂ (NOₓ), en particulier présents dans des gaz d'échappement, par exemple de moteurs à combustion interne de véhicules automobiles fonctionnant en milieu sur-stoechiométrique en oxydants, lesdits matériaux pouvant adsorber les NOₓ et pouvant désorber les NOₓ par élévation de la température ou par traitement avec un mélange riche en réducteurs. Les matériaux sont des oxydes mixtes dont la charpente est constituée de cations métalliques M entourés chacun de 6 atomes d'oxygène et dont les octaèdres (MO₆) ainsi formés reliés entre eux par les arêtes et les sommets génèrent une structure qui présente des canaux mono-directionnels.

### Intérêt de l'invention

Le matériau selon l'invention permet de piéger les oxydes d'azote aux basses températures et de les désorber à la température à laquelle un catalyseur DeNOx est capable de les réduire. Ces matériaux sont insensibles aux oxydes de soufre et de carbone contenus dans les gaz d'échappement, ce qui évite l'empoisonnement desdits matériaux. Les matériaux réalisent l'adsorption des oxydes d'azote dans une large gamme de température, alors que la désorption s'effectue dans une fenêtre de température très étroite permettant une gestion aisée de la régénération thermique. Lors de la désorption, les oxydes d'azote préalablement adsorbés sont émis par bouffées de forte concentration en NOₓ, ce qui est bénéfique pour la cinétique de réaction de réduction des oxydes d'azote désorbés. La cinétique de réduction des NOₓ par des hydrocarbures est en effet d'ordre positif par rapport aux espèces oxydes d'azote. Le dit matériau ne présente pas de phase oxyde basique qui stabilise fortement les oxydes d'azote et les oxydes de soufre respectivement sous formes de nitrates et de sulfates. Les SOₓ qui peuvent être insérés avec les NOₓ dans la structure du matériau faisant l'objet de l'invention sont désorbés dans une gamme de température similaire à celle des NOₓ. L'empêchement de la formation de sulfates stables assure un empoisonnement moindre du matériau adsorbant, une fréquence et une température de régénération moins éievée, donc une durée de vie accrue du piège à NOₓ et un gain énergétique.
Le matériau selon l'invention permet également une désorption chimique par variation de la composition chimique des gaz des oxydes d'azote. Selon une mise en oeuvre particulière de l'invention, l'association des matériaux revendiqués par la demanderesse avec un métal du groupe VIII permet l'élimination des NOₓ adsorbés par réduction lors du passage en milieu riche.

### Exposé de l'invention

La présente invention concerne des matériaux pour l'adsorption et la désorption des oxydes d'azote dont la structure est composée d'octaèdres (MO₆), M étant choisi parmi les éléments des groupes IIIB à IIIA dans la classification périodique des éléments. De préférence cet élément (M) est à un degré d'oxydation moyen proche de 4. Le dit matériau présente une structure caractéristique qui génère des canaux dans laquelle les NOₓ peuvent s'insérer aux basses températures et en sortir à plus haute température. Les côtés de ces canaux sont formés par l'enchaînement des octaèdres (MO₆) qui se lient entre eux par les arêtes, ces côtés se liant entre eux par les sommets des octaèdres. Ainsi, selon le mode de préparation, la largeur des canaux peut varier dépendant du fait que les cotés sont composés de 2 ou 3 octaèdres (MO₆). Ce type de matériau est connu sous l'acronyme OMS signifiant Octahedral Molecular Sieves (tamis moléculaire composé d'octaèdres). Les matériaux sont choisis parmi les matériaux de structure cryptomélane ou hollandite, romanéchite, todorokite.
Plus précisément, l'invention concerne un procédé pour l'élimination des oxydes d'azotes dans des gaz d'échappement, en particulier de moteur à combustion interne de véhicules automobile en présence de matériaux de type OMS.

La phase adsorbante des matériaux utilisés dans le procédé selon l'invention a une structure tridimensionnelle qui génère des canaux dans au moins une direction de l'espace, est composée d'octaèdres (MO₆), et comprend :
- au moins un élément (M) choisi dans le groupe constitué par les éléments des groupes IIIB_{,} IVB, VB, VIB, VIIB, IB, IIB, IIIA de la classification périodique des éléments, chaque élément M étant en coordinence avec 6 atomes d'oxygène,et se situant au centre des octaèdres d'oxygène,
- au moins un élément (B) choisi dans le groupe constitué par les éléments alcalins IA, alcalino-terreux IIA, terres rares IIIB, métaux de transition ou les éléments des groupes IIIA et IVA, l'élément B se situant généralement dans les canaux de la structure oxyde.

Les octaèdres ne contiennent pas d'étain. De manière très préférée, ils ne contiennent aucun élément du groupe IVA.

Dans une mise en oeuvre de l'invention, le matériau comprend éventuellement au moins un métal (C) choisi dans le groupe des métaux précieux de la famille du platine (groupe VIII).
Cette mise en oeuvre permet de réaliser la réduction des NOₓ subséquemment lors de l'adsorption puis de la désorption. Le matériau selon l'invention réalise donc de manière surprenante les trois étapes sur un seul matériau.

Les éléments M sont choisis parmi le scandium, l'yttrium, le lanthane, le titane, le zirconium, le hafnium, le vanadium, le nobium, le tantale, le chrome, le molybdène, le tungstène, le manganèse, le rhénium, le fer, le ruthénium, l'osmium, le cobalt, le rhodium, l'iridium, le nickel, le palladium, le platine, le cuivre, l'argent, l'or, le zinc, le cadmium, le gallium, l'aluminium, l'indium, le thallium.

La somme des charges (degré d'oxydation) portés par le ou les cations M appartenant aux groupes IIIB à IIIA est de préférence d'environ +4. Au moins la majeure partie des éléments (M) est de préférence choisie parmi le manganèse, le tungstène, le zirconium, le molybdène, le chrome, le titane ou le mélange d'au moins deux de ces éléments et de manière préférée le manganèse, le titane, le zirconium. D'autres éléments M des groupes IIIB à IIIA peuvent être ajoutés en quantité minoritaire comme dopants. De préférence, les éléments des groupes IIIB à IIIA ajoutés en quantité minoritaire sont choisis parmi l'aluminium, le zinc, le cuivre, le nickel, le cobalt, le fer, le chrome, le scandium et l'yttrium, le gallium, le cadnium, l'indium, et de manière encor plus préférée choisis parmi l'aluminium, le zinc, le cadmium, le scandium, l'yttrium.

Les éléments (B) appartiennent au groupe des éléments alcalins IA, alcalino-terreux IIA, terres rares IIIB ou métaux de transition. Ils se situent dans les canaux du matériau. De préférence on choisit un métal alcalin ou alcalino-terreux par exemple le potassium, le baryum ou le strontium.

Les éléments (C) appartiennent au groupe formé par le platine, le palladium, le rhodium, le ruthénium, l'iridium, et l'osmium, de préférence on choisit le platine. Cette mise en oeuvre de l'invention comprenant au moins un élément (C) choisi parmi les métaux nobles du groupe VIII permet d'oxyder NO en NO₂.

La phase adsorbante selon l'invention a la composition massique, exprimée en pour cent masse par rapport à la masse totale de cette phase active calcinée à 1000°C pendant 4h, suivante :
- 40 à 80 % d'au moins un métal M, de préférence 50 % à 75 %,
- 0,01 à 30 %, de préférence 1,5 à 20% d'au moins un élément (B) appartenant au groupe des éléments alcalins, alcalino-terreux, terres rares, métaux de transition ou les éléments des groupes IIIA et IVA de la classification périodique des éléments.
- éventuellement 0,05 à 5 % d'au moins un métal (C) appartenant au groupe des métaux précieux du groupe VIII de la classification périodique.
Le complément en masse est apporté par l'oxygène des liaisons oxydes.

Il existe différents procédés de préparation de ces matériaux [S.L. Suib, C-L. O'Young, Synthesis of Porous Materials, M.L. Occelli, H. Kessler (eds.) M. Dekker, Inc., p. 215 1997]. Il peut s'agir de synthèses par mélange et broyage de précurseurs solides inorganiques des métaux M et B, suivi d'une calcination. Les matériaux peuvent aussi être obtenus par chauffage à reflux de solutions de sels de précurseur, séchage et calcination, par précipitation des sels précurseurs ou par synthèse hydrothermale qui consiste à chauffer sous pression autogène une solution aqueuse contenant les éléments constituant le matériau final. Les matériaux obtenus à partir de ces synthèses peuvent être modifiés par échange ionique ou substitution isomorphe.

Le métal (C) éventuel est introduit par toutes les méthodes connues de l'homme du métier : imprégnation en excès, à sec, échange ionique, ...

Le matériau selon l'invention présente généralement une surface spécifique comprise entre 20 et 300 m².g⁻¹.

Les phases adsorbantes peuvent se présenter sous forme de poudre, de billes, de pastilles, d'extrudés, elles peuvent être également déposées ou directement préparées sur des supports monolithiques en céramique ou en métal. Avantageusement, en vue d'augmenter la dispersion des matériaux et donc d'augmenter leur capacité à adsorber les NOₓ, les matériaux peuvent être déposés sur des supports poreux de grande surface spécifique tels que de la silice ou de l'alumine (SiO₂, Al₂O₃, TiO₂, ZrO₂, SiC, MgO...) avant d'être mis en forme (extrusion, enduction...). Ces supports sont généralement choisis dans le groupe constitué par les composés ci-après : l'alumine (alpha, béta, delta, gamma, khi, ou l'alumine thêta), les silices, les silice-alumines, les zéolites, l'oxyde de titane, l'oxyde de zirconium, les carbures divisés, par exemple les carbures de silicium, simple ou mixtes. Des oxydes mixtes ou des solutions solides comprenant au moins deux des oxydes précités peuvent être ajoutés.

Cependant, pour l'utilisation sur véhicule, il est souvent préférable de mettre en oeuvre des supports rigides (monolithes) présentant une porosité ouverte importante (supérieure à 70%) afin de limiter les pertes de charge que pourraient engendrer les forts débits de gaz, et surtout les grandes vitesses spatiales des gaz d'échappement. En effet, ces pertes de charge pénalisent le bon fonctionnement du moteur et contribuent à abaisser le rendement d'un moteur à combustion interne (essence ou Diesel). Par ailleurs, la ligne d'échappement étant soumise à des vibrations ainsi qu'à des chocs mécaniques et thermiques importants, les catalyseurs en billes, en pastilles ou en extrudés risquent de subir des détériorations soit par attrition soit par fracturation.

Deux techniques sont mises en oeuvre pour préparer les catalyseurs de l'invention sur des supports (ou substrats) monolithique en céramique ou en métal.

La première comprend le dépôt direct sur le support monolithique, par la technique d'enduction connue de l'homme de l'art, de la phase adsorbante préparée selon le mode opératoire décrit par exemple dans la référence [S.L. Suib, C-L. O'Young, Synthesis of Porous Materials, M.L. Occelli, H. Kessler (eds.) M. Dekker, Inc., p. 215 1997]. La phase adsorbante peut être enduite juste après l'étape de co-précipitation, de synthèse hydrothermale ou de chauffage à reflux, l'étape ultime de calcination étant effectuée sur la phase déposée à même le monolithe, ou l'enduction peut être effectuée sur le monolithe après que le matériau soit préparé dans son état final, c'est à dire après l'étape ultime de calcination.

La seconde technique comprend tout d'abord, le dépôt de l'oxyde inorganique sur le support monolithique puis la calcination du monolithe entre 500 et 1100°C de telle manière que la surface spécifique de cet oxyde soit comprise entre 20 et 150 m²g⁻¹, puis l'enduction du substrat monolithique recouvert par l'oxyde inorganique avec la phase adsorbante obtenue après les étapes décrites dans la référence [S.L. Suib, C-L. O'Young, Synthesis of Porous Materials, M.L. Occelli, H. Kessler (eds.) M. Dekker, inc., p. 215 1997].

Les supports monolithes qui peuvent être mis en oeuvre sont:
- soit en céramique, dont les éléments principaux peuvent être l'alumine, la zircone, la cordiérite la mullite, la silice, les alumino-silicates ou la combinaison de plusieurs de ces composés,
- soit en carbure et/ou nitrure de silicium,
- soit en titanate d'aluminium,
- soit en métal généralement obtenu à partir d'alliage de fer, chrome et aluminium dopés éventuellement par du nickel, du cobalt, du cérium ou de l'yttrium.

Les supports céramiques ont une structure de type nid d'abeille ou se présentent sous forme de mousse ou de fibres.
Les supports métalliques peuvent être réalisés par l'enroulement de feuillards ondulés ou par l'empilement de feuilles métalliques également ondulées, constituant une structure en nid d'abeille à canaux droits ou à canaux en zigzag communiquant entre eux ou non. Ils peuvent être également réalisés à partir de fibres ou de fils métalliques enchevêtrés, tissés, tressés ou tricotés.

Pour les supports en métal renfermant de l'aluminium dans leur composition, il est recommandé de les prétraiter à haute température (par exemple entre 700 et 1100°C) pour développer en surface une micro-couche d'alumine réfractaire. Cette micro-couche superficielle, de porosité et de surface spécifique supérieure à celle du métal d'origine favorise l'accrochage de la phase active tout en protégeant le reste du support contre la corrosion.

La quantité de phase adsorbante déposée ou préparée directement sur le support (ou substrat) céramique ou métallique est généralement comprise entre 20 et 300g par litre dudit support et avantageusement entre 50 et 200g par litre.

Les matériaux selon l'invention permettent donc d'adsorber et de désorber les oxydes d'azote présents dans les gaz, en particulier les gaz d'échappement.

Ces matériaux sont caractérisés en ce qu'ils sont capables d'adsorber les NOₓ à une température généralement comprise entre 50 et 400°C et de préférence entre 100 et 350°C, et de manière plus préférée entre 150 et 300°C. Les dits oxydes d'azote peuvent être désorbés par chauffage à une température généralement comprise entre 300 et 500°C et de manière préférée comprise entre 350 et 450°C. Ils peuvent aussi être désorbés par variation de la composition des gaz, en augmentant par exemple de façon ponctuelle la concentration en composés réducteurs tels que hydrocarbures, hydrogène, monoxyde de carbone, à des températures comprises ente 150 et 500°C, de préférence entre 200 et 450°C et de manière plus préférée entre 300 et 400°C. Thermiquement ou chimiquement, la désorption des oxydes d'azote peut être déclenchée dans des gammes de températures où les catalyseurs classiques de réduction des NOx sont efficaces. De plus, la désorption thermique selon l'invention peut avoir lieu sur d'étroites fenêtres de températures avec généralement une amplitude de 80°C. Or, pour les voitures Diesel, la température des gaz d'échappement est généralement comprise entre 150 et 300°C et dépasse rarement les 500°C. Les matériaux utilisés dans le procédé selon l'invention sont donc adaptés à l'adsorption des oxydes d'azote présents dans les gaz d'échappement, de moteurs stationnaires ou particulièrement de moteurs automobiles Diesel ou à allumage commandé (moteurs dits à réglage pauvre), mais également dans les gaz issus de turbine à gaz fonctionnant avec des carburants gazeux ou liquides. Ces gaz se caractérisent aussi par des teneurs en oxydes d'azote de quelques dizaines à quelques milliers de parties par million (ppm), et peuvent contenir des teneurs comparables en composés réducteurs (CO, H₂, hydrocarbures) et en soufre, ainsi que des concentrations importantes en oxygène (de 1 à près de 20% volume) et en vapeur d'eau. Le matériau selon l'invention peut être utilisé à des VVH (vitesses volumiques horaires correspondant à des rapports de volume de monolithe par débit de gaz) du gaz d'échappement généralement comprises entre 500 et 150 000 h-1, par exemple entre 5000 et 100 000 h-1.

L'invention concerne également l'utilisation des matériaux pour l'adsorption et la désorption des oxydes d'azote dans un procédé d'élimination des oxydes d'azote, tout particulièrement dans un milieu sur-stoechiométrique en oxydants. Ainsi le matériau selon l'invention peut être utilisé dans un procédé comprenant :
- une étape d'adsorption d'au moins une partie desdits oxydes d'azote sur un matériau d'adsorption tel que défini dans la présente invention,
- une étape de désorption des oxydes d'azote, se faisant par augmentation de la température, ou par variation de la composition des gaz d'échappement,
- une étape de réduction sélective d'au moins une partie des oxydes d'azote en azote moléculaire par des agents réducteurs en présence d'au moins un catalyseur de réduction des oxydes d'azote.

Ainsi le procédé d'élimination des oxydes d'azote comprend lors de l'étape de réduction des oxydes d'azote l'utilisation d'un catalyseur actif et sélectif pour la réduction des oxydes d'azote en azote moléculaire dans un milieu sur-stoechiométrique en oxydants, par des agents réducteurs. Les catalyseurs de réduction des oxydes d'azote en azote ou protoxyde d'azote comprennent généralement au moins un oxyde inorganique réfractaire et peuvent comprendre au moins une des zéolithes, choisie par exemple parmi les zéolithes MFI, NU-86, NU-87, EU-1 et généralement au moins un élément choisi parmi les éléments des groupes VIB, VIIB, VIII et IB des métaux de transition. Ces catalyseurs peuvent contenir éventuellement au moins un élément choisi parmi les métaux nobles du groupe VIII, par exemple le platine, le rhodium, le ruthénium, l'iridium, le palladium et éventuellement au moins un élément choisi parmi les éléments des groupes IIA des alcalino-terreux et IIIB des terres rares. Par exemple les catalyseurs de réduction des oxydes d'azote comprennent les combinaisons suivantes : Cu-ZSM5, Cu-MFI, Fe-MFI, Fe-ZSM5, Ce-MFI, Ce-ZSM5, Pt-MFI, Pt-ZSM5.

L'oxyde inorganique réfractaire est choisi parmi les supports de type Al₂O₃, SiO₂, ZrO₂ et TiO₂, de préférence l'alumine.
Les agents réducteurs sont choisis parmi CO, H₂, les hydrocarbures, présents dans le carburant ou ajoutés sous forme de produits frais.

Dans le cas où le matériau d'adsorption des oxydes d'azote selon la présente invention contient au moins un élément (C) choisi parmi les métaux nobles du groupe VIII de la classification périodique des éléments, le procédé d'élimination des oxydes d'azote comprend :
- une étape d'adsorption d'au moins une partie desdits oxydes d'azote sur le matériau tel que défini dans la présente invention,
- une étape de désorption des oxydes d'azote,
- une étape de réduction sélective d'au moins une partie des oxydes d'azote en azote moléculaire en présence de composés réducteurs sur le matériau tel que défini dans la présente invention.
Ainsi, la réduction des oxydes d'azotes en azote ou protoxyde d'azote peut avoir lieu directement sur le matériau d'adsorption selon l'invention qui permet à la fois de piéger les oxydes d'azote, de désorber lesdits oxydes d'azote et de les réduire.

### EXEMPLES

Les exemples, 1 et 6 à 16 ci-après, illustrent l'invention sans en limiter la portée.
Les exemples 2 à 5, décrivent les matériaux utilisés en piégeage des NOx selon l'art antérieur. A titre de comparaison, tous ces catalyseurs sont testés au laboratoire en micro unité avec un mélange de gaz synthétique.

Dans tous les exemples, la désignation de phase adsorbante déposée sur le support (ou substrat) correspond, après perte au feu, à la somme des éléments constituant le matériau décrit dans la procédure ci-dessus, à savoir : le ou les éléments (M) contenu au centre des octaèdres d'oxygène, au moins un élément (B), éventuellement au moins un métal précieux (C).

Les teneurs massiques des différents éléments constituants la phase adsorbante sont mentionnées en pourcentage dans le tableau I. L'oxygène des phases oxydes n'est pas pris en compte dans le bilan de masse.

### Exemple 1 (invention)

On ajoute une solution contenant 165 g d'acétate de manganèse dissous dans 600 ml d'eau distillée et 75 ml d'acide acétique à une solution contenant 100 g de permanganate de potassium dans 2.250 I d'eau distillée. On chauffe le mélange à reflux pendant 24 heures. On filtre le précipité, puis on le lave et on le sèche à l'étuve à 100°C. Avant utilisation, il est calciné sous air à 600°C.

### Exemple 2 (comparatif)

On prépare un matériau d'occlusion des NOₓ tel que décrit dans le brevet JP 9075714, ayant la formulation suivante K₁₈Zn_{0.9}Sn₆₂O₁₆ et qui présente la structure hollandite (vérifié par diffraction des rayons X) et une faible surface spécifique.

### Exemple 3 (comparatif)

On prépare un matériau d'occlusion des NOₓ tel que décrit dans le brevet JP 9075714, ayant la formulation suivante K_{1.8}Zn_{0.9}Sn₆₂O₁₆ et qui présente la structure hollandite (vérifié par diffraction des rayons X) et une surface spécifique assez élevée.

### Exemple 4 (comparatif)

On prépare le matériau d'occlusion des NOₓ de formule YBa₂Cu₃O₇₋ₓ selon la technique décrite dans le brevet EP 0 664 147, et qui présente la structure pérovskite (vérifié par diffraction des rayons X).

### Exemple 5 (comparatif)

On utilise un matériau de formule PtBaLa-CeO₂-Al₂O₃-TiO2 tel que décrit dans la demande de brevet EP 0 666 103 A1, pour piéger les NOx par formation de nitrates.

### Exemple 6 (invention)

On reproduit le catalyseur de l'exemple 1 puis on l'imprègne avec du platine dans une proportion correspondant à 1 pourcent massique. Le dépôt de platine se fait par imprégnation à sec à partir d'une solution de Pt(NH₃)₄(NO₃)₂.

**Tableau I : Composition massique des matériaux préparés selon les exemples 1 à 6**

| **Exemples** | **Matériaux** | S_{BET} (m²/g) | K | Ba | La | Ce | Y | Cu | Zn | Mn | Sn | Ti | Al | Pt |
|---|---|---|---|---|---|---|---|---|---|---|---|---|---|---|
| Exemple 1 (inv.) | K-Mn | 75 | 5,0 | | | | | | | 60,0 | | | | |
| Exemple 2 (comp.) | Hollandite K-Sn-Zn petite surface | 4 | 11,2 | | | | | | 9,4 | | 58,9 | | | |
| Exemple 3 (comp.) | Hollandite K-Sn-Zn grande surface | 80 | 11,2 | | | | | | 9,4 | | 58,9 | | | |
| Exemple 4 (comp.) | YbaCuO | 4 | | 41,7 | | | 13,5 | 29,0 | | | | | | |
| Exemple 5 (comp.) | PtBaLa-CeO₂-Al₂O₃-TiO₂ | 120 | | 18 | 3 | 11 | | | | | | 8,5 | 18,1 | 0,5 |
| Exemple 6 (inv.) | Pt/K-Mn | 75 | 5,0 | | | | | | | 60,0 | | | | 1 |

### Exemple 7 : Résultats des tests d'adsorption et de désorption thermique des oxydes d'azote

Les matériaux testés sont installés dans un micro-réacteur placé au centre d'un four. Ils subissent un prétraitement à 600°C pendant 5 heures sous un mélange gazeux constitué d'azote contenant 18,5 % O₂ et 4 % H₂O. Sous le même mélange, ces matériaux sont amenés à la température de 200°C, où ils sont alors traversés pendant 20 minutes par un mélange gazeux contenant des oxydes d'azote.

| | |
|---|---|
| **Vitesse spatiale horaire (WH)** : | 5000h⁻¹ |
| **Composition du mélange:** | |
| NOₓ : | 800ppm : NO 650ppm, NO2 150ppm |
| O₂ : | 18,5 % |
| H₂O : | 4 % |
| N₂ : | complément à 100% |

Après les vingt minutes d'adsorption, l'alimentation en oxydes d'azote est coupée, et les matériaux subissent un chauffage pour désorber les NOₓ :

| | |
|---|---|
| **Vitesse spatiale horaire (WH)** : | 5000h⁻¹ |
| **Composition du mélange:** | |
| O₂ : | 18, 5 % |
| H₂O : | 4% |
| N₂ : | complément à 100% |
| **Fenêtre de température de désorption :** | 200 à 600°C |
| **Rampe de température** : | 10°C/min |

Dans le tableau Il ci-dessous sont rassemblées les valeurs indiquant la quantité d'oxydes d'azote adsorbés ainsi que les températures de désorption de ces oxydes. A l'exception des matériaux de l'exemple 4 et de l'exemple 6 qui contiennent déjà du platine dans leur composition, les résultats affichés dans les colonnes " avec platine ", sont ceux des matériaux concernés auxquels a été mélangée une phase Pt/SiO₂ équivalent à un pourcentage massique de 1% par rapport à la masse totale du mélange. Il a été vérifié que, dans nos conditions, cette phase Pt/SiO₂ ne joue pas le rôle de masse adsorbante des oxydes d'azote.

**Tableau II : Résultats des tests d'adsorption à 200°C et de désorption en micro - unité**

| **Exemple** | **Matériaux** | **surface spécifique** | sans Pt | | avec Pt | |
|---|---|---|---|---|---|---|
| | | (m²/g) | **Capacité** à 200°C (mgNO/g) | **T_{dés}** (°C) | **Capacité** à 200°C (mgNO/g) | **T_{dés}** (°C) |
| 1 (inv.) | K-Mn | 75 | 3,6 | 350 et 425 | 3,2 | 350 et 425 |
| 2 (comp) | Hollandite K-Sn-Zn | 4 | 0,09 | 425 | | |
| 3 *(comp)* | Hollandite K-Sn-Zn | 80 | 2,0 | 410 | 1,8 | 410 |
| 4 (comp) | YbaCuO | 4 | 1,1 | 490 | | |
| 5 (comp) | Pt-Ba-Ce-La/TiO₂-Al₂O₃ | 120 | | | 6,1 | 570 |
| 6 (inv.) | K-Mn + Pt | 75 | | | 2,5 | 340 et 420 |

On constate que les matériaux revendiqués par la demanderesse particulièrement quand ils n'ont pas de phase au platine, sont plus efficaces dans l'adsorption des oxydes d'azote que les matériaux testés pour comparaison. Les matériaux selon la présente invention procurent donc l'avantage d'être très adsorbants, sans la contrainte de la présence de platine. Surtout les matériaux revendiqués montrent une température de désorption des oxydes d'azote relativement basse, adéquate pour une application dans une ligne d'échappement d'un moteur Diesel.

Le tableau III ci-dessous rassemble les valeurs indiquant la quantité d'oxydes d'azote adsorbés par le matériau de l'exemple 1 dans les conditions précédentes mais à des températures d'adsorption différentes.

**Tableau III : Résultats des tests d'adsorption des NOx par le matériau de l'exemple 1**

| | **Capacité d'adsorption** (mgNO/g) aux températures de | | | | | |
|---|---|---|---|---|---|---|
| Matériau | 50°C | 150°C | 200°C | 300°C | 350°C | 390 |
| Exemple 1 | 3.3 | 3.0 | 3.6 | 3.6 | 2.5 | 1.9 |

La capacité d'adsorption n'est guère affectée par la température, ce qui permet de travailler sur une large gamme de températures. L'analyse des gaz en sortie du micro-réacteur montre que les matériaux revendiqués adsorbent, jusqu'à leur saturation, la totalité des NOₓ (indifféremment NO ou NO₂) avec lesquels ils sont en contact entre 50°C et la température de désorption, c'est pourquoi les matériaux selon la présente invention présentent de bonnes performances d'adsorption, même en absence de phase oxydante (par exemple Pt supporté).

### Exemple 14 : Résultats des tests d'adsorption et de désorption thermique des NOₓ en présence d'hydrocarbures et de CO₂

Les matériaux testés sont installés dans un réacteur placé au centre d'un four. Ils subissent un prétraitement à 600°C pendant 5 heures sous un mélange gazeux constitué d'azote contenant 18.5% O₂ , 5% CO₂, 4% H₂O et 2000 ppmC de C₂H₄. Sous le même mélange, ces matériaux sont amenés à la température de 200°C, où ils sont alors traversés pendant 20 minutes par un mélange gazeux contenant des oxydes d'azote.

| | |
|---|---|
| **Vitesse spatiale horaire (WH)** : | 50 000 h-¹ |
| **Composition du mélange:** | |
| NOₓ : | 800ppm : NO 650ppm, NO2 150ppm |
| O₂ : | 18.5% |
| H₂O : | 4% |
| CO₂ : | 5% |
| C₂H₄ : | 2000 ppmC |
| N₂ : | complément à 100% |

Après les vingt minutes d'adsorption, l'alimentation en oxydes d'azote est coupée, et les matériaux subissent un chauffage pour désorber les NOₓ :

| | |
|---|---|
| **Vitesse spatiale horaire (VVH)** : | 50 000 h-1 |
| **Composition du mélange:** | |
| O₂ : | 18.5% |
| H₂O : | 4% |
| CO₂ : | 5% |
| C₂H₄ : | 2000 ppmC |
| N₂ : | complément à 100% |
| **Fenêtre de température de désorption :** | 200 à 600°C |
| **Rampe de température :** | 10°C/min |

Dans le tableau IV ci-dessous, sont rassemblées pour le matériau de l'exemple 1 les valeurs indiquant la quantité d'oxydes d'azote adsorbés ainsi que les températures de désorption de ces oxydes ; elles sont comparées aux résultats obtenus dans les conditions précédentes pour le même matériau.

On constate que les matériaux revendiqués par la demanderesse et représentés par l'exemple 1 montrent une efficacité comparable en adsorption des oxydes d'azote, que la VVH soit égale à 5000 ou à 50000 h⁻¹. De plus, si le mélange est rendu plus complexe par ajout d'autres molécules gazeuses (CO₂, C₂H₄) classiquement contenues dans des gaz d'échappement et dont la taille pourrait permettre qu'elles s 'adsorbent dans les canaux des matériaux, on s'aperçoit que la capacité d'adsorption n'est abaissée que de 30% environ.
De tels résultats montrent que les matériaux revendiqués par la demanderesse peuvent être utilisés pour le piégeage des oxydes d'azote contenus dans des gaz d'échappement, présentant de fortes VVH et des molécules gazeuses autres que les NOₓ.
Les températures de désorption des oxydes d'azote piégés dans le matériau ne sont pas significativement modifiées ni par l'augmentation de la VVH ni par la présence d'autres molécules adsorbées sur le matériau.

**Tableau IV: Résultats des tests d'adsorption**

| **Exemple** | **WH** (h⁻¹) | **Composition du mélange lors du prétraitment** | **Composition du mélange lors de l'adsorption** | **Capacité** à 200°C (mgNO/g) | **T_{dés}** (°C) |
|---|---|---|---|---|---|
| 1 (inv.) | 5 000 | O₂, H₂O, N₂ | NO, O₂, H₂O, N₂ | 3.6 | 350 et 425 |
| 1 (inv.) | 50 000 | O₂, H₂O, N₂ | NO, O₂, H₂O, N₂ | 3.5 | 360 |
| *1 (inv.)* | 50 000 | O₂, CO₂, H₂O, C₂H₄, N₂ | NO, O₂, CO₂, H₂O, C₂H₄, N₂ | 2.4 | 350 |

### Exemple 15 : Résultat des tests d'adsorption et de désorption thermique des NOₓ en présence de molécules soufrées.

Les matériaux testés sont installés dans un micro-réacteur placé au centre d'un four. Ils subissent un prétraitement à 600°C pendant 5 heures sous un mélange gazeux constitué d'azote contenant 18,5 % O₂ et 4 % H₂O. Sous le même mélange, ces matériaux sont amenés à la température de 200°C, où ils sont alors traversés pendant 20 minutes par un mélange gazeux contenant des oxydes d'azote et du dioxyde de soufre.

| | |
|---|---|
| **Vitesse spatiale horaire (VVH)** : | 5 000 h⁻¹ |
| **Composition du mélange:** | |
| NOₓ : | 800ppm : NO 650ppm, NO2 150ppm |
| SO₂ : | 50 ppm |
| O₂ : | 18,5 % |
| H₂O : | 4 % |
| N₂ : | complément à 100% |

Après les vingt minutes d'adsorption, l'alimentation en oxydes d'azote et de soufre est coupée, et les matériaux subissent un chauffage pour désorber les NOₓ :

| | |
|---|---|
| **Vitesse spatiale horaire (WH)** : | 5 000 h⁻¹ |
| **Composition du mélange:** | |
| O₂ : | 18,5 % |
| H₂O : | 4 % |
| N₂ : | complément à 100% |
| **Fenêtre de température de désorption :** | 200 à 600°C |
| **Rampe de température** : | 10°C/min |

Ils subissent alors une seconde série d'adsorption et de désorption.

Dans le tableau V ci-dessous, sont rassemblées pour les matériaux de l'exemple 1 les valeurs indiquant la quantité d'oxydes d'azote adsorbés ainsi que les températures de désorption de ces oxydes, en présence ou non de dioxyde de soufre.

**Tableau V : Evaluation de la sensibilité au soufre**

| | | | 1^{ere} adsorption | | 2^{nde} adsorption | |
|---|---|---|---|---|---|---|
| **Exemples** | **WH** (h⁻¹) | | **Capacité** à 200°C (mgNO/g) | **T_{dés}** (°C) | **Capacité** (après désorption à 600°C) à 200°C (mgNO/g) | **T_{dés}** (°C) |
| 1(inv.) | 5000 | sans SO₂ | 3.6 | 350 et 425 | 3,5 | 350 et 425 |
| 1 (inv.) | 5000 | avec SO₂ | 3.2 | 355 et 420 | 3.1 | 350 et 415 |
| 5 (comp.) | 5000 | sans SO₂ | 6.1 | 570 | 5,7 | 570 |
| 5 (comp.) | 5000 | avec SO₂ | 4.1 | 560 | 3,0 | 560 |

La capacité d'adsorption des oxydes d'azote des matériaux de l'exemple 1 n'est abaissée que de 10 à 15 % en présence d'oxyde de soufre contre 33 % pour le matériau de l'exemple 5 selon l'art antérieur.
Les températures de désorption des oxydes d'azote qui ont été piégés sont sensiblement égales aux températures obtenues lors des expériences sans soufre.
Cependant, les matériaux de l'exemple 1 retrouvent la totalité de leur capacité d'adsorption initiale après une désorption thermique à 600°C (la capacité lors de l'adsorption 2 est sensiblement égale à la capacité de la première adsorption), ce qui n'est pas le cas pour le composé de l'exemple 5. Les pièges à NOₓ revendiqués par la demanderesse présentent donc le gros avantage de pouvoir se régénérer facilement après avoir été en contact avec des oxydes de soufre alors que les matériaux fonctionnant en piégeage des NOₓ par formation de nitrates (exemple 5) sont empoisonnés par des espèces sulfates qui sont extrêmement stables thermiquement.

### Exemple 16 : Résultats des tests d'adsorption et de désorption par variation de la richesse des gaz

Les matériaux testés sont installés dans un micro-réacteur placé au centre d'un four. Ils subissent un prétraitement à 600°C pendant 5 heures sous un mélange gazeux constitué d'azote contenant 18,5 % O₂ et 4 % H₂O puis sont ramenés sous le même mélange à 50°C. Les matériaux sont alors traversés par un gaz contenant des oxydes d'azote dont la composition est transitoire, en alternance composé d'un mélange pauvre en hydrocarbures pendant 110 secondes puis d'un mélange riche en hydrocarbures pendant 10 sec, et sont amenés à différents paliers de températures compris entre 50 et 600°C.

| | |
|---|---|
| **Vitesse spatiale horaire (WH)** : | 5000h⁻¹ |
| **Composition du mélange pauvre (R=0,3)**: | |
| NOₓ : | 1750ppm : NO 1400ppm, NO2 350ppm |
| O₂ : | 18,5% |
| H₂O : | 4 % |
| N₂ : | complément à 100% |
| **Composition du mélange riche (R=1,2)** : | |
| C₂H₄ : | 2% |
| H₂O : | 2% |
| N₂ : | complément à 100% |

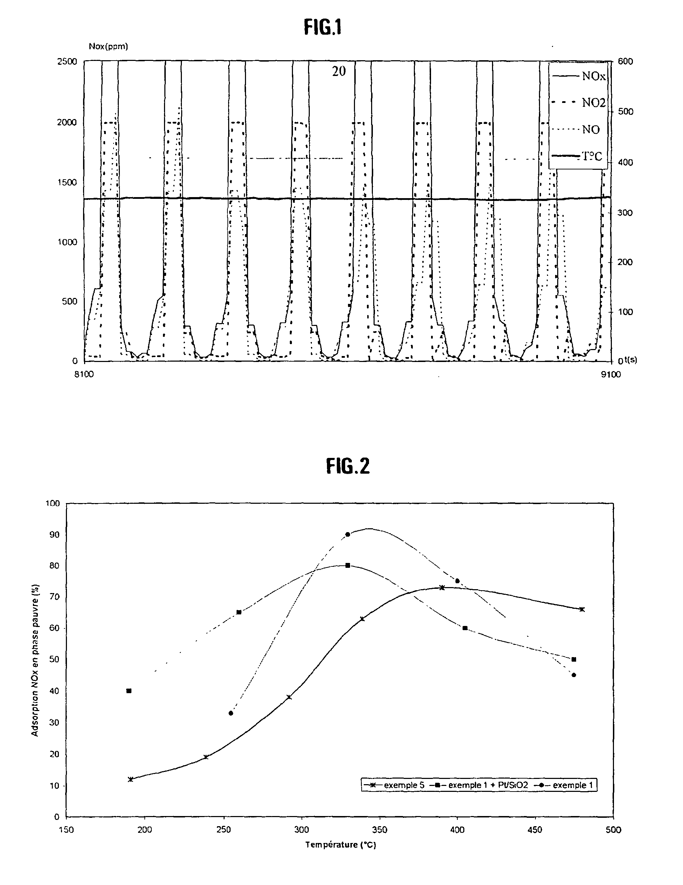

La figure I annexée montre le mode de fonctionnement du matériau de l'exemple 1 au palier à 330°C.
A partir de 200°C, l'injection de gaz riche en hydrocarbures permet de désorber la totalité des NOx préalablement adsorbés pendant le mode de fonctionnement en pauvre.

La figure II annexée compare l'efficacité en adsorption des oxydes d'azote du type de matériau revendiqué par la demanderesse, avec ou sans platine, au matériau de l'exemple 5. La figure représente pour chaque palier de température le rapport du taux de NOx adsorbés par rapport au taux de NOₓ injecté pendant la phase pauvre.
Dans le cadre d'un fonctionnement avec régénération chimique, on constate que pour des températures inférieures ou égales à 400°C, le matériau de l'exemple 1, avec ou sans platine, est celui qui adsorbe le maximum d'oxydes d'azote avec un maximum d'efficacité atteint aux températures voisines de 300-350°C.

## Revendications

1. Procédé pour l'élimination des oxydes d'azote dans des gaz d'échappement, en particulier de moteurs à combustion interne de véhicules automobiles, en présence d'un matériau choisi parmi les matériaux de structure cryptomélane, hollandite, romanéchite, todorokite, comprenant des octaèdres MO₆ s'enchaînant de façon à ce que la structure génère une microporosité sous forme de canaux, lesdits octaèdres comprenant essentiellement au moins un élément M, situé au centre des octaèdres d'oxygènes, autre que l'étain et choisi parmi les éléments des groupes IIIB, IVB, VB, VIB, VIIB, VIII, IB, IIB, IIIA de la classification périodique, ledit matériau comprenant en outre au moins un élément (B) choisi dans le groupe constitué par les éléments alcalins, alcalino-terreux, les terres rares, les métaux de transition, les éléments des groupes IIIA, IVA de la classification périodique des éléments.

2. Procédé selon la revendication 1 **caractérisé en ce que** le degré de valence moyen des métaux (M) des octaèdres est d'environ +4.

3. Procédé selon l'une des revendications 1 à 2, **caractérisé en ce que** au moins la majeure partie de l'élément (M) est choisie parmi le manganèse, le tungstène, le zirconium, le titane, le molybdène, le chrome.

4. Procédé selon la revendication 3 **caractérisé en ce que** ledit matériau comprend en outre au moins un élément M choisi parmi l'aluminium, le zinc, le cuivre, le nickel, le cobalt, le fer, le chrome, le scandium et l'yttrium.

5. Procédé selon l'une des revendications 1 à 4 **caractérisé en ce que** ledit matériau comprend en outre au moins un métal (C) choisi parmi les métaux nobles du groupe VIII de la classification périodique des éléments.

6. Procédé selon la revendication 5, **caractérisé en ce que** l'élément (C) est le platine.

7. Procédé selon l'une des revendications 1 à 6 **caractérisé en ce que** ledit matériau comprend en pourcentage massique :
- 40 à 80 % d'au moins un métal M,
- 0,01 à 30 % d'au moins un élément (B)
- éventuellement 0,05 à 5 % d'au moins un métal (C)
le complément en masse étant apporté par l'oxygène des liaisons oxydes.

8. Procédé selon l'une des revendications 1 à 7 **caractérisé en ce que** la surface spécifique dudit matériau est comprise entre 20 et 300 m² g⁻¹

9. Procédé selon l'une des revendications 1 à 8, **caractérisé en ce que** ledit matériau comprend au moins un support poreux.

10. Procédé selon la revendication 9, **caractérisé en ce que** le support poreux est choisi parmi les composés suivants : SiO₂, Al₂O₃, TiO₂, ZrO₂, SiC, MgO, alumino-silicate.

11. Procédé selon l'une des revendications 1 à 10 **caractérisé en ce que** ledit matériau comprend au moins un support rigide.

12. Procédé selon l'une des revendications 1 à 11 **caractérisé en ce qu'**il comprend une étape d'adsorption des oxydes d'azote effectuée à une température comprise entre 50 et 400°C.

13. Procédé selon la revendication 12 **caractérisé en ce qu'**il comprend en outre une étape de désorption des oxydes d'azote mise en oeuvre par élévation de la température.

14. Procédé selon la revendication 13 **caractérisé en ce que** la désorption thermique des oxydes d'azote est effectuée à une température comprise entre 300 et 500°C.

15. Procédé selon la revendication 12 **caractérisé en ce qu'**il comprend en outre une étape de désorption des oxydes d'azote mise en oeuvre par variation de la composition des gaz.

16. Procédé selon la revendication 15 **caractérisé en ce que** la désorption chimique des oxydes d'azote est effectuée à une température comprise entre 150 et 500°C.

17. Procédé selon l'une des revendications 12 à 16 comprenant en outre une étape de réduction des oxydes d'azote en azote moléculaire et/ou en protoxyde d'azote.

18. Procédé selon la revendication 17 **caractérisé en ce que** la réduction des oxydes d'azote a lieu en présence d'un catalyseur comprenant au moins un oxyde inorganique réfractaire, éventuellement au moins une zéolithe, au moins un élément choisi parmi les éléments des groupes VIB, VIIB, VIII et IB des métaux de transition, éventuellement au moins un élément choisi parmi les métaux nobles du groupe VIII, et éventuellement au moins un élément choisi parmi les éléments des groupes IIA des alcalino-terreux et IIIB des terres rares.

19. Procédé selon la revendication 17 **caractérisé en ce que** l'étape d'adsorption des oxydes d'azote, l'étape de désorption des oxydes d'azote et l'étape de réduction des oxydes d'azote a lieu en présence d'un matériau selon l'une des revendications 5 à 6.

20. Procédé selon la revendication 1 **caractérisé en ce que** le moteur est un moteur de type Diesel.

## Claims

1. A process for eliminating oxides of nitrogen from exhaust gases, in particular from automotive vehicle internal combustion engines, in the presence of a material selected from materials with a cryptomelane, hollandite, romanechite or todorkite structure, comprising MO₆ octahedra connected together such that the structure generates micropores in the form of channels, said octahedra essentially comprising at least one element M, located at the centre of the oxygen octahedra, other than tin and selected from elements from goups IIIB, IVB, VB, VIB, VIIB, VIII, IB, IIB and IIIA of the periodic table, said material further comprising at least one element (B) selected from the group formed by the alkaline elements, the alkaline-earth elements, the rare earth elements, the transition metals and elements from groups IIIA, IVA of the periodic table.

2. A process according to claim 1, **characterized in that** the average valency of the metals (M) in the octahedra is about +4.

3. A process according to claim 1 or claim 2, **characterized in that** at least the major portion of element (M) is selected from manganese, tungsten, zirconium, titanium, molybdenum and chromium.

4. A process according to claim 3, **characterized in that** said material further comprises at least one element M selected from aluminium, zinc, copper, nickel, cobalt, iron, chromium, scandium and yttrium.

5. A process according to any one of claims 1 to 4, **characterized in that** said material further comprises at least one metal (C) selected from noble metals from group VIII of the periodic table.

6. A process according to claim 5, **characterized in that** said element (C) is platinum.

7. A process according to any one of claims 1 to 6, **characterized in that** said material comprises, as a percentage by weight:
• 40% to 80% of at least one metal M;
• 0.01 % to 30% of at least one element (B);
• optionally, 0.05% to 5% of at least one metal (C),
the complement is formed by the oxygen of the corresponding oxides.

8. A process according to any one of claims 1 to 7, **characterized in that** the specific surface area of said material is in the range 20 to 300 m²/g.

9. A process according to any one of claims 1 to 8, **characterized in that** said material comprises at least one porous support.

10. A process according to claim 9, **characterized in that** the porous support is selected from the following compounds: SiO₂, Al₂O₃, TiO₂, ZrO₂, SiC, MgO and alumino-silicate.

11. A process according to any one of claims 1 to 10, **characterized in that** said material comprises at least one rigid support.

12. A process according to any one of claims 1 to 11, **characterized in that** adsorption of the oxides of nitrogen is carried out at a temperature in the range 50°C to 400°C.

13. A process according to claim 12, **characterized in that** it further comprises a step for desorbing the oxides of nitrogen implemented by raising the temperature.

14. A process according to claim 13, **characterized in that** thermal desorption of the oxides of nitrogen is carried out at a temperature in the range 300°C to 500°C.

15. A process according to claim 12, **characterized in that** it further comprises a step for desorbing the oxides of nitrogen implemented by varying the gas composition.

16. A process according to claim 15, **characterized in that** chemical desorption of the oxides of nitrogen is carried out at a temperature in the range 150°C to 500°C.

17. A process according to any one of claims 12 to 16, further comprising a step for reducing oxides of nitrogen to molecular nitrogen and/or nitric oxide.

18. A process according to claim 17, **characterized in that** reduction of the oxides of nitrogen takes place in the presence of a catalyst comprising at least one inorganic refractory oxide, optionally at least one zeolite, at least one element selected from elements from transition metal groups VIB, VIIB, VIII and IB, optionally at least one element selected from the noble metals of group VIII, and optionally at least one element selected from elements from the alkaline-carth group IIA, and the rare earth group IIB.

19. A process according to claim 17, **characterized in that** the step for adsorbing the oxides of nitrogen, the step for desorbing the oxides of nitrogen and the step for reducing the oxides of nitrogen take place in the presence of a material according to claim 5 or claim 6,

20. A process according to claim 1, **characterized in that** the engine is a diesel type engine.

## Patentansprüche

1. Verfahren zur Entfernung von Stickoxiden in Auspuffgasen, insbesondere von Verbrennungsmotoren in Automobilen, in Gegenwart eines Materials, das ausgewählt ist aus den Strukturmaterialien Cryptomelan, Hollandit, Romanechit, Todorokit, welches MO₆ Oktaeder umfasst, die sich so aneinander reihen, dass die Struktur eine Mikroporosität in Form von Kanälen erzeugt, wobei die Oktaeder im wesentlichen mindestens ein Element M umfassen, das sich im Zentrum der Sauerstoffoktaeder befindet, bei dem es sich nicht um Zinn handelt und das ausgewählt ist aus den Elementen der Gruppen IIIB, IVB, VB, VIB, VIIB, VIII, IB, IIB, IIIA des Periodensystems, wobei das Material ferner mindestens ein Element (B) umfasst, das ausgewählt ist aus der Gruppe, die von alkalischen, erdalkalischen Elementen, seltenen Erden, Übergangsmetallen, den Elementen der Gruppen IIIA, IVA des Periodensystems der Elemente gebildet wird.

2. Verfahren nach Anspruch 1, **dadurch gekennzeichnet, dass** der mittlere Valenzbereich der Metalle (M) der Oktaeder ungefähr +4 beträgt.

3. Verfahren nach einem der Ansprüche 1 bis 2, **dadurch gekennzeichnet, dass** mindestens der Hauptanteil des Elements (M) ausgewählt ist aus Mangan, Wolfram, Zirkonium, Titan, Molybdän, Chrom.

4. Verfahren nach Anspruch 3, **dadurch gekennzeichnet, dass** das Material ferner mindestens ein Element M umfasst, das ausgewählt ist aus Aluminium, Zink, Kupfer, Nickel, Kobalt, Eisen, Chrom, Scandium und Yttrium.

5. Verfahren nach einem der Ansprüche 1 bis 4, **dadurch gekennzeichnet, dass** das Material ferner mindestens ein Metall (C) umfasst, das ausgewählt ist aus den Edelmetallen der Gruppe VIII des Periodensystems der Elemente.

6. Verfahren nach Anspruch 5, **dadurch gekennzeichnet, dass** das Element (C) Platin ist.

7. Verfahren nach einem der Ansprüche 1 bis 6, **dadurch gekennzeichnet, dass** das Material in spezifischen Prozentangaben umfasst :
- 40 bis 80 % mindestens eines Metalls M,
- 0,01 bis 30 % mindestens eines Elements (B),
- gegebenenfalls 0,05 bis 5 % mindestens eines Metalls (C),
wobei die Massenergänzung durch als Oxid gebundenen Sauerstoff beigetragen wird.

8. Verfahren nach einem der Ansprüche 1 bis 7, **dadurch gekennzeichnet, dass** die spezifische Oberfläche des Materials zwischen 20 und 300 m²g⁻¹ beträgt.

9. Verfahren nach einem der Ansprüche 1 bis 8, **dadurch gekennzeichnet, dass** das Material mindestens einen porösen Träger umfasst.

10. Verfahren nach Anspruch 9, **dadurch gekennzeichnet, dass** der poröse Träger aus den folgenden Verbindungen ausgewählt ist: SiO₂, Al₂O₃, TiO₂, ZrO₂, SiC, MgO, Aluminosilikat.

11. Verfahren nach einem der Ansprüche 1 bis 10, **dadurch gekennzeichnet, dass** das Material mindestens einen starren Träger umfasst.

12. Verfahren nach einem der Ansprüche 1 bis 11, **dadurch gekennzeichnet, dass** es einen Schritt der Adsorption von Stickoxiden umfasst, der bei einer Temperatur zwischen 50 und 400 °C ausgeführt wird.

13. Verfahren nach Anspruch 12, **dadurch gekennzeichnet, dass** es ferner einen Schritt der Desorption von Stickoxiden umfasst, wofür eine Temperaturerhöhung eingesetzt wird.

14. Verfahren nach Anspruch 13, **dadurch gekennzeichnet, dass** die thermische Desorption der Stickoxide bei einer Temperatur zwischen 300 und 500 °C ausgeführt wird.

15. Verfahren nach Anspruch 12, **dadurch gekennzeichnet, dass** es ferner einen Schritt der Desorption von Stickoxiden umfasst, wofür eine Variation der Gaszusammensetzung eingesetzt wird.

16. Verfahren nach Anspruch 15, **dadurch gekennzeichnet, dass** die chemische Desorption der Stickoxide bei einer Temperatur zwischen 150 und 500 °C ausgeführt wird.

17. Verfahren nach einem der Ansprüche 12 bis 16, das ferner einen Schritt der Reduktion der Stickoxide zu molekularem Stickstoff und/oder Distickstoffoxid umfasst.

18. Verfahren nach Anspruch 17, **dadurch gekennzeichnet, dass** die Reduktion der Stickoxide in Gegenwart eines Katalysators stattfindet, der mindestens ein hitzebeständiges anorganisches Oxid umfasst, gegebenenfalls mindestens einen Zeolith, mindestens ein Element ausgewählt aus den Elementen der Gruppen VIB, VIIB, VIII und IB der Übergangsmetalle, gegebenenfalls mindestens ein Element ausgewählt aus den Edelmetallen der Gruppe VIII sowie gegebenenfalls mindestens ein Element ausgewählt aus den Elementen der Gruppen IIA der Erdalkalimetalle und IIIB der soltenen Erden.

19. Verfahren nach Anspruch 17, **dadurch gekennzeichnet, dass** der Schritt der Adsorption der Stickoxide, der Schritt der Desorption der Stickoxide sowie der Schritt der Reduktion der Stickoxide in Gegenwart eines Materials nach den Ansprüchen 5 bis 6 stattfindet.

20. Verfahren nach Anspruch 1, **dadurch gekennzeichnet, dass** der Motor ein Motor vom Typ Diesel ist.
